# EUROPEAN PATENT APPLICATION

(11) **EP 1 342 876 A1**
(43) Date of publication of application: **10.09.2003**
(21) Application number: 03250180.1
(22) Date of filing: 13.01.2003
(51) Int. Cl.: E05F 15/10, B60R 16/02, H02G 11/00

(54) **Vehicle with movable partition**

(30) Priority: 20.02.2002 GB 0203941
(71) Applicant: ArvinMeritor Light Vehicle Systems-France, 45600 Sully-sur-Loire (FR)
(72) Inventor: Dobson, Simon, Sandgate, Kent CT20 3TA (GB)
(74) Representative: Jones, John Bryn

(57) **Abstract**

The present invention relates to a vehicle comprising a sliding door (14) arrangable to close a space (12) defined by fixed structure of vehicle chassis (13). A flexible wiring harness (18) is positioned between the fixed structure (13) and the door (14), to power parts of the partition. The flexible wiring harness (18) is arranged to coil up as the door (14) moves to open the space (12) and unroll as the door closes the space.

## Description

The present invention relates to a vehicle and in particular power supply for a moving partition, for example, a sliding door or sliding window, of a vehicle.

Sliding partitions for vehicles, e.g. electrically actuated doors and windows, require maximum electrical power when the partition is closed. For example, de-misting of a window is unnecessary when the window is open, operation of an electric window in a sliding door when the door is open is unnecessary and, generally speaking, undesirable, etc.

Typically, sliding partitions are supplied power from a flexible harness that is rolled up in the closed position of the partition, and which unrolls as the partition opens. However, since maximum power is supplied when the partition is closed, the flexible harness can overheat due to resistive heating, which is exacerbated by lack of ventilation and the electromagnetic effects of the harness.

An aim of the invention is to provide an improved power supply for a movable partition of a vehicle.

According to the invention there is provided a vehicle comprising a movable partition arrangable to close a space defined by the vehicle, and a flexible wiring harness operating between the fixed structure of the vehicle and the partition, to power parts of the partition, wherein the flexible wiring harness is arranged to coil up as the partition moves to open the space and unroll as the partition closes the space.

The flexible wiring harness has two ends; a first end fixed to the fixed structure of the vehicle and a second end fixed to the partition. In one preferred embodiment of the invention, the coil is formed at the second end of the wiring harness fixed to the partition. In another preferred embodiment of the invention, the coil is formed at a point along the wiring harness between the first end and second end.

Due to the present invention, the flexible wiring harness may be arranged at any height of the partition without obstructing the space during operation of the partition.

A vehicle sliding partition power supply will now be described by example and with reference to the accompanying figures in which,
figure 1 is a schematic view of a vehicle sliding door assembly in accordance with a first embodiment of the invention, with the door open,
Figure 2 is a schematic view of the vehicle sliding door assembly of figure 1, with the door closed,
Figure 3 is a schematic view of an alternative wiring harness arrangement to that shown in figure 1 in accordance with the invention, with the door open, and
Figure 4 is a view of the wiring harness arrangement of figure 3 with the door closed.

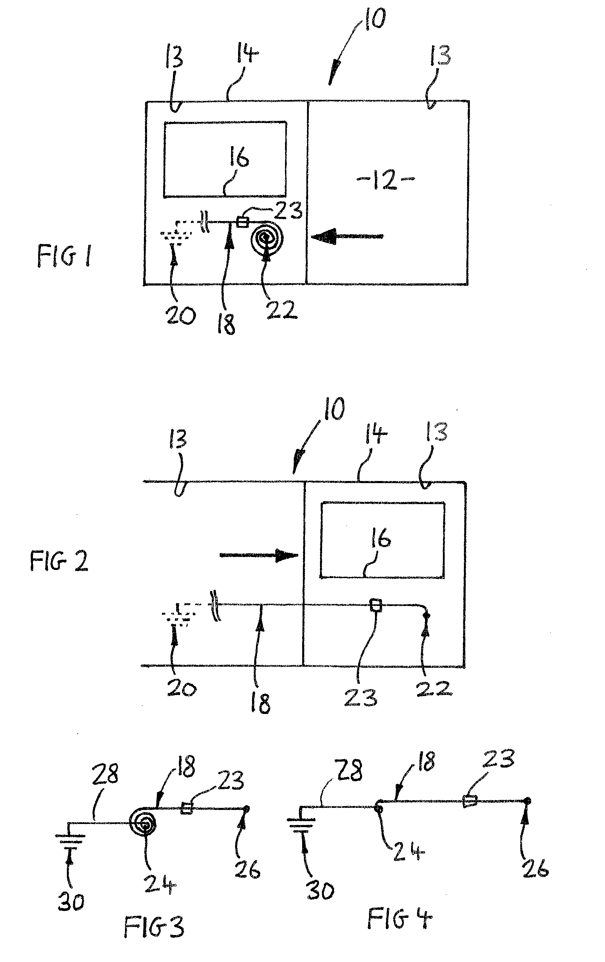

Referring to figure 1 and 2, a vehicle (not shown) comprises a moving partition assembly such as a sliding door assembly 10 in accordance with the invention.

The sliding door assembly 10 comprises an opening 12 defined by fixed structure of the vehicle 13 and a sliding door 14 mounted on the vehicle.

The door 14 has a window 16 although this is by no means essential to the invention.

In accordance with the invention there is a flexible wiring harness 18 arranged to connect the door 14 to the fixed structure of the vehicle 13, thus allowing electrical devices such as actuators and lights mounted on this door to be powered from say the vehicle battery.

In a first embodiment of the invention illustrated by figures 1 and 2, the flexible wiring harness 18 has a first end 20 and a second end 22 which are arranged to connect the wiring harness to the fixed structure of the vehicle 13 (which is omitted and hence shown in broken line) and the door 14 respectively. First end 20 is typically connected by a further bearing harness (not shown) to other electrical components of the vehicle. Second end 22 is typically connected by a further wiring harness (not shown) to other electrical components of the door 14.

The first end 20 is behind the door 14 when it is closed. The second end 22 is spool like. Due to the arrangement, a movable coil forms at the second end 22 when the door 14 is open as shown in figure 1. In particular it can be seen that the axis of the coil moves with the door.

A guide 23 is shown arranged on the door, although it can also/otherwise be arranged on the fixed structure of the vehicle 13. This reduces rattle and vibration between the harness 18 and parts of the fixed structure of the vehicle 13.

Looking at figure 2, it can be seen that the wiring harness 18 unrolls as the door slides to close the opening 12. The provision of a substantially unfurled wiring harness when the door closes the opening 12, allows maximum power to be applied with less fear of wiring harness overheating etc.

By referring to figures 1 and 2, It will also be noticed that the wiring harness 18 can extend substantially straightly across the opening 12 since the first end 20 and the second end 22 trail the leading edge of the sliding door 14.

In a second embodiment of the invention illustrated by figures 3 and 4, the flexible wiring harness 18 has a first end 24 and a second end 26 which are arranged to connect the wiring harness to the fixed structure of the vehicle 13 (not shown) and the door (not shown). In this embodiment, a line such as a further wiring harness 28, extends between the first end 24 and a fixed point 30 on the fixed structure of the vehicle 13. The first end 24 acts like a fixed spool to allow the wiring harness to roll up thereon when the door 14 is open. In particular it can be seen that the axis of the coil is fixed relative to the fixed structure of the vehicle 13. This embodiment alleviates weight from the door 14.

It will be appreciated that both embodiments of the invention allow free ventilation to the, and radiant cooling of the, wiring harness 18 to take place. This has obvious performance, and indeed safety, benefits.

## Claims

1. A vehicle comprising a movable partition (14) arrangable to close a space (12) defined by the vehicle, and a flexible wiring harness (18) between the fixed structure of the vehicle (13) and the partition, to power parts of the partition, wherein the flexible wiring harness is arranged to coil up as the partition moves to open the space and unroll as the partition closes the space.

2. A vehicle according to claim 1, wherein the flexible wiring harness has two ends; a first end (20) fixed relative to the fixed structure of the vehicle and a second end (22) fixed to the partition in which the coil is formed at the second end of the wiring harness fixed to the partition.

3. A vehicle according to claim 1, wherein the flexible wiring harness has two ends; a first end (24) fixed relative to the fixed structure of the vehicle and a second end (26) fixed to the partition, in which the coil is formed at or towards the first end.

4. A vehicle according to any preceding claim, wherein the flexible wiring harness is at least partially arranged across the space when the partition closes the space and arranged so that it does not obstruct the space during opening of the partition.

5. A vehicle according to any preceding claim, wherein a guide (23) acts on the wiring harness.
